# EUROPEAN PATENT SPECIFICATION

(11) **EP 1 368 448 B1**
(45) Date of publication and mention of the grant of the patent: **20.09.2006**
(21) Application number: 01920987.3
(22) Date of filing: 16.02.2001
(51) Int. Cl.: C11B 5/00, B01J 20/10

(54) **COOKING OIL ADDITIVE AND METHOD OF USING**
SPEISEÖLADDITIV UND VERWENDUNGSVERFAHREN
ADDITIF D'HUILE DE CUISSON ET PROCEDE D'UTILISATION

(43) Date of publication of application: 10.12.2003
(73) Proprietor: Harvest Marketing, Inc., Burr Ridge, IL 60527-5768 (US)
(72) Inventor: James Papanton, Burr Ridge, IL 60527-5768 (US)
(74) Representative: Modiano, Micaela Nadia
(86) International application number: PCT/US2001/040131
(87) International publication number: WO 2002/066587

(56) References cited:
- JP-A- 58 135 120
- US-A- 1 261 453
- US-A- 3 947 602
- US-A- 4 112 129
- US-B1- 6 210 732

## Description

### Background of the Invention

This invention relates to a composition and method for rejuvenating cooking oils and more particularly, to a composition and method for treating and prolonging the life of frying oils.

Frying oils decompose over time and use due to the formation and acquisition of various contaminants during cooking. In addition, the cooking oil picks up particulate and soluble contaminants in food uses from the food being fried. These impurities detract from the taste and texture of the food and additionally the cooking process then takes longer. The accumulation of these contaminants results in a visibly darker color to the oil, which color gets darker with use, including higher levels of contaminants as well.

Generally speaking, in restaurant use frying oils may be used for approximately three to four days and then must be discarded. In this manner the quality of the food being fried can be kept uniform.

Accordingly, a principal object of the subject invention is to increase the useful life of frying oils.

### Summary of the Invention

This and other objects may be attained by the subject invention wherein the rate of degradation of cooking oil can be reduced, thereby extending the useful life of the oil. The composition of the subject invention reduces the build up rate of free fatty acids and polar substances, simultaneously reducing the oxidation of the oil and carbon build up on the fryer walls and burners.

The composition of the subject invention comprises a mixture of calcium silicate and citric acid and is utilized in a method for extending the useful life of the cooking oil by blending the calcium silicate with the citric acid, introducing the mixture to the cooking oil and allowing to mix in the oil through convection currents in the oil. After an initial period, the oil is filtered on a predetermined schedule a fresh composition mixture of the subject invention is added to the filtered oil. The oil is filtered and the composition of the subject invention is added on a daily or more frequent basis, dependent on use.

### Detailed Description of the Invention

The subject invention involves a composition mixture of citric acid and calcium silicate and the method of so using that composition mixture for prolonging the cooking life of a frying oil.

In formulating the composition mixture, the calcium silicate is milled to a fine powder of approximately 75 microns and is a food grade synthetic amorphous precipitated calcium silicate having a bulk density of less than 119,17 g/l (1 pound per gallon), a pH of 10 (in a 5% solution), and a surface area of greater than 300 cubic meters BET.

The citric acid is also food grade and a fine powder of approximately 75 microns.

The calcium silicate is blended with the citric acid to a mixture that comprises 70%-90% calcium silicate and 10%-30% citric acid, preferably 75% calcium silicate and 25% citric acid.

In the method of the subject invention the compound mixture is introduced into the hot oil (about 135°C to 176.6°C (275°F to 350°F)) and its particles allowed to circulate in the oil through the natural convective movement created when heated oil on the bottom of the container rises to the top. The compound mixture of the subject invention is thus uniformly mixed and suspended in the frying oil and is immediately activated. After a predetermined period of use, sometimes 1 day, but generally every 6-8 hours, dependent on the nature and amount of use of the oil, the oil is filtered to remove crumbs and other sediment. The filtered oil is returned to the fryer and the compound mixture of the subject invention is added in an amount sufficient to prevent contamination of the oil. Generally, the appropriate amount of compound mixture to add to the oil is from 50 to 70 milliliters dry volume per 22.68 kg. (50 lbs.) of frying oil, and preferably 60 milliliters dry volume per 22.68 kg.

The preferred cooking oils and frying oils include vegetable derived, animal derived, and marine source derived fats and fatty oils that are liquids at the particular temperature that is necessary for the desired cooking effect. Illustrative sources of edible vegetable oil include canola, coconut, corngerm, cotton seed, olive, palm, peanut, rapeseed, safflower, sesame seed, soy bean and sunflower. Edible animal derived oil includes lard and tallow. Other oils may also be used. It is intended that the oils be useful for cooking at temperatures from 135°C - 187.7°C (275° - 370°F) and preferably at ranges from 148.8°C - 176.6°C (300°F - 350°F) without significant deterioration for a period of time.

In evaluating the subject invention a test for determining the amount of polar substances in fats was performed as described in more complete detail in U.S. Patent No. 4,731,332, hereinafter referred to as the Blumenthal test, by mixing a predetermined amount of a one-phase test solution with a predetermined amount of the fat. The test solution comprises an indicator and a solvent. The indicator is soluble in the solvent and the fat is substantially immiscible with the solvent. The pH of the test solution is such that the indicator in combination with polar substances extracted from the fat will provide polychromatic visible or fluorescent color changes in the test solution in response to characteristic amounts of polar substances in the fat. The indicator and solvent are present in amounts effective to provide the polychromatic visible or fluorescent color change which depends on the amo9unt of polar substances in the fat. The fat and test solution are allowed to separate into a solvent phase and a fat phase, and the amount of polar substances in the fat is determined from the color developed in the solvent phase by comparing said developed color to a known standard. Such a test is available from Miroil of Allentown, PA, as the Fry Quality Assurance Test - PCM.

Another test also referred to as the Blumenthal test, and used in evaluating the subject invention is described in U.S. Patent No. 4,349,353, determines the amount of alkaline substances in used cooking fat. In this test, a predetermined amount of test solution is mixed with a predetermined amount of fat. The test solution comprises a pH indicator dye having a visible color change in the pH range of from about 2.5 to about 7.0 and a solvent in which the dye is soluble and with which the fat is immiscible. The dye and solvent are present in the test solution in amounts effective to provide a visible color change which depends upon the amount of alkaline substance, e.g., soaps, in the fat. The pH of the test solution is such that the color of the test solution prior to the mixing step corresponds to the color of the dye at the lower end of the color change range for the dye. After mixing, the fat and test solution are allowed to separate into a solvent phase and a fat phase. The amount of alkaline substances in the fat is then determined from the color developed in the solvent phase by comparing the developed color to a known standard, e.g., visually, in a colorimeter or in a spectrophotometer. Preferably, the color developed in the solvent phase is compared with a set of colors standardized so that each color corresponds to a specified amount of soap and/or other alkaline substances in the predetermined amount of fat. This test is available from Miroil of Allentown, PA, as the Frying Quality Assurance Test-ACM.

In the Blumenthal tests of frying oils utilizing the compound mixture of the subject invention, a numerical scale was used to indicate specific color shades observed against colors depicted on a standardized color card. Thus, on the polar contaminate test referred to above, a blue color (1) indicates good oil, and becomes lighter (2), changing to light green (3) and finally dark green (4), as the oil goes bad (3 and 4 being unacceptable).

In the alkaline contaminate test, the colors vary from yellow (0) to light green (1) to dark green (2) to light blue (3) to dark blue (4) as the oil goes from good to unacceptable (2, 3 and 4 being unacceptable).

### Example 1

A standard vegetable oil (canola) was used to cook chicken at 157 °C (315 F). The chicken was generally cooked for 17 ½ minutes for white meat, and 20 minutes for dark meat; this procedure resulted in a golden colored product with a dry, crispy texture. After four days of use of the same cooking oil, the chicken took on a shiny, oily look with dark spots of color, was dehydrated and had considerable oil absorption.

### Example 2

Compound mixture of the subject invention was prepared by preparing a mixture of 75% calcium silicate with 25% citric acid. 60 milliliters (dry) of this mixture was introduced into a commercial fryer and allowed to distribute throughout the canola cooking oil through the convective action of the hot oil. The oil was brought to a temperature of 153°C (308°F) and chicken pieces were cooked therein. Chicken (white meat) was cooked for 16 minutes and chicken (dark meat) was cooked for 18 ½ minutes. The resulting fried product had a moist inside and a crispy outside, being golden in color with a dry, but not oily, appearance.

### Example 3

The cooking oil of Example 2 is utilized in cooking chicken for 8 continuous hours at a temperature of 176.6°C (350°F). After eight hours, the oil is filtered and 60 milliliters of the compound mixture of the subject invention is added. The chicken is fried in this rejuvenated oil was moist inside and crisp outside, golden in color and dry, not only in appearance.

### Examples 4-6

As further examples of the subject invention, frying oil was prepared as in Example 2. French fries, onion rings, hash browns, chicken fillets and French toast sticks were fried in the oil on a generally continuous basis at 350°F. the oil was filtered every 7-9 hours of use (twice daily) and 60 ml of the compound mixture of the subject invention added after each filtering. The oil was tested at the end of every day by the Blumenthal tests described above, resulting in the noted observations. After seven days (each cycle) the oil was completely replaced with fresh oil.

| **EXAMPLE 4** | | | | | | | |
|---|---|---|---|---|---|---|---|
| DAY | 1 | 2 | 3 | 4 | 5 | 6 | 7 |
| alkaline | 0 | 0 | 1 | 1 | 1 | 1 | 2 |
| polar | 1 | 1 | 1 | 1 | 2 | 2 | 3 |

| **EXAMPLE 5** | | | | | | | |
|---|---|---|---|---|---|---|---|
| DAY | 8 | 9 | 10 | 11 | 12 | 13 | 14 |
| alkaline | 0 | 0 | 1 | 1 | 1 | 2 | 3 |
| polar | 1 | 1 | 1 | 1 | 2 | 2 | 3 |

| **EXAMPLE 6** | | | | | | | |
|---|---|---|---|---|---|---|---|
| DAY | 15 | 16 | 17 | 18 | 19 | 20 | 21 |
| alkaline | 0 | 0 | 1 | 1 | 1 | 3 | 3 |
| polar | 1 | 1 | 1 | 1 | 2 | 2 | 3 |

| **EXAMPLE 7** | | | | | | | |
|---|---|---|---|---|---|---|---|
| DAY | 22 | 23 | 24 | 25 | 26 | 27 | 28 |
| alkaline | 0 | 0 | 1 | 1 | 1 | 1 | 2 |
| polar | 1 | 1 | 1 | 1 | 2 | 2 | 4 |

During the period of the above test the fryers did not have to be boiled out, the foods were superior in quality, texture and with minimal absorption of oil to the food. Initially, a control was run, based on a standard work week oil, was replaced every Monday and Friday with fresh oil. The oil was filtered twice a day through a paper filter and maintained at 350°F. Testing at the end of each period, i.e., on Sunday night and on Thursday night consistently showed Blumenthal test readings for both alkaline and polar tests of 3 and 4, showing that the oil was, in fact, unacceptable. Use of the oil was extended by use of the subject invention from the standard 3-4 days to a maximum of seven days before the oil has to be discarded.

After the fourth week the test concluded and no further citric acid/calcium silicate mixture was added to the oil. After three days, unsatisfactory alkaline and polar Blumenthal test results were observed and the food quality started deteriorating.

The introduction of the citric acid/calcium silicate mixture to the existing frying and oil maintenance program increased the life of the oil from an average of 3-4 days to 7 days. The quality of the food was consistently good during the extended use cycle.

By the above, it is apparent that the compound mixture of the subject invention permitted the lengthening of the useful life of the cooking oil while also allowing a decrease in temperature in the frying session while achieving the maintenance of appearance and desired taste of the fried food.

It is intended that the invention will include all embodiments falling within the scope of the appended claims.

Various features of the invention are set forth in the following claims.

## Claims

1. A cooking oil additive for prolonging the useful life of the cooking oil, comprising: a mixture of citric acid and synthetic amorphous precipitated calcium silicate.

2. The additive of claim 1 wherein said mixture includes 70% to 90% calcium silicate 10% to 30% citric acid.

3. The additive of claim 1 wherein said mixture includes 75% calcium silicate and 25% citric acid.

4. A cooking oil mixture comprising an oil for frying food products, said oil having citric acid and calcium silicate suspended therein, the concentration of the citric acid and the calcium silicate in the oil being 60 millilitres dry volume per 22.68 kilograms of oil.

5. The mixture of claim 4 wherein the 60 millilitres of citric acid and calcium silicate is 75% calcium silicate and 25% citric acid.

6. A cooking oil mixture comprising an oil for flying food products, said oil having 70% to 90% calcium silicate and 10% to 30% citric acid, suspended therein.

7. A method of prolonging the life of cooking oil comprising the steps of:
a) heating a volume of the oil in a cooking vessel;
b) adding calcium silicate and citric acid to the oil;
c) allowing the oil to circulate;
d) cooking food with the oil for six to eight hours;
e) filtering the oil to remove sediment and crumbs;
f) returning the filtered oil to the vessel;
g) adding additional calcium silicate and citric acid to the filtered oil;
h) resume cooking with the oil for six to eight hours; and
i) repeating steps e to h.

8. The method of claim 7 wherein the oil is heated to a temperature from 135°C (275 DEG F) to 176.6°C (350 DEG F).

9. The method of claim 7, wherein the step of adding calcium silicate and citric acid includes the step of mixing 70% to 90% calcium silicate with 10% to 30% citric acid to form a mixture.

10. The method of claim 7, wherein the step of adding calcium silicate and citric acid includes the step of mixing 75% calcium silicate with 25% citric acid to form a mixture.

11. The method of claim 7, wherein the calcium silicate and citric acid are suspended in the oil by the natural convection of the heated oil.

## Patentansprüche

1. Ein Speiseöl-Zusatz zum Verlängern der Brauchbarkeitsdauer des Speiseöls, der folgendes umfasst: eine Mischung aus Zitronensäure und synthetischem amorphem präzipitiertem Kalziumsilikat.

2. Der Zusatz von Anspruch 1, worin die Mischung 70% bis 90% Kalziumsilikat, 10% bis 30% Zitronensäure einschließt.

3. Der Zusatz von Anspruch 1, worin die Mischung 75% Kalziumsilikat und 25% Zitronensäure einschließt.

4. Eine Speiseöl-Mischung, die ein Öl zum Braten von Lebensmittelprodukten umfasst, wobei in dem Öl Zitronensäure und Kalziumsilikat suspendiert sind, wobei die Konzentration der Zitronensäure und des Kalziumsilikats in dem Öl 60 ml Schüttvolumen pro 22,68 kg Öl beträgt.

5. Die Mischung von Anspruch 4, worin die 60 ml Zitronensäure und Kalziumsilikat zu 75 % Kalziumsilikat und zu 25 % Zitronensäure sind.

6. Eine Speiseöl-Mischung, die ein Öl zum Braten von Lebensmittelprodukten umfasst, wobei das Öl 70% bis 90% Kalziumsilikat und 10% bis 30% Zitronensäure hat, die darin suspendiert sind.

7. Ein Verfahren zum Verlängern der Brauchbarkeitsdauer des Speiseöls, das folgende Schritte umfasst:
a) Erhitzen eines Volumens des Öls in einem Kochgefäß;
b) Hinzufügen von Kalziumsilikat und Zitronensäure zu dem Öl;
c) Zirkulierenlassen des Öls;
d) Kochen von Nahrungsmitteln mit dem Öl über einen Zeitraum von sechs bis acht Stunden;
e) Filtern des Öls, um Sediment und Krümel zu entfernen;
f) Rückführen des gefilterten Öls in das Gefäß;
g) Hinzufügen von zusätzlichem Kalziumsilikat und Zitronensäure zu dem gefilterten Öl;
h) Wiederaufnehmen des Kochens mit dem Öl über einen Zeitraum von sechs bis acht Stunden; und
i) Wiederholen der Schritte e) bis h).

8. Das Verfahren von Anspruch 7, worin das Öl auf eine Temperatur von 135°C (275 Grad F) bis 176,6°C (350 Grad F) erhitzt wird.

9. Das Verfahren von Anspruch 7, worin der Schritt des Hinzufügens von Kalziumsilikat und Zitronensäure den Schritt des Mischens von 70% bis 90% Kalziumsilikat mit 10% bis 30% Zitronensäure zum Bilden einer Mischung einschließt.

10. Das Verfahren von Anspruch 7, worin der Schritt des Hinzufügens von Kalziumsilikat und Zitronensäure den Schritt des Mischens von 75% Kalziumsilikat mit 25% Zitronensäure zum Bilden einer Mischung einschließt.

11. Das Verfahren von Anspruch 7, worin das Kalziumsilikat und die Zitronensäure in dem Öl durch die natürliche Konvektion des erhitzten Öls suspendiert werden.

## Revendications

1. Additif d'huile de cuisson pour prolonger la durée de vie utile de l'huile de cuisson, comprenant : un mélange d'acide citrique et de silicate de calcium précipité synthétique amorphe.

2. Additif selon la revendication 1, dans lequel ledit mélange comprend 70% à 90 % de silicate de calcium et 10 % à 30 % d'acide citrique.

3. Additif selon la revendication 1, dans lequel ledit mélange comprend 75% de silicate de calcium et 25 % d'acide citrique.

4. Mélange d'huiles de cuisson comprenant une huile pour frire des produits alimentaires, ladite huile ayant en suspension de l'acide citrique et du silicate de calcium, la concentration de l'acide citrique et du silicate de calcium dans l'huile étant de 60 millilitres de volume sec pour 22,68 kilogrammes d'huile.

5. Mélange selon la revendication 4, dans lequel les 60 millilitres d'acide citrique et de silicate de calcium sont constitués de 75 % de silicate de calcium et de 25 % d'acide citrique.

6. Mélange d'huiles de cuisson comprenant une huile pour frire des produits alimentaires, ladite huile ayant, en suspension, 70 % à 90 % de silicate de calcium et 10 % à 30 % d'acide citrique.

7. Procédé de prolongation de la durée de vie d'une huile de cuisson comprenant les étapes consistant à :
a) chauffer un volume de l'huile dans un récipient de cuisson ;
b) ajouter à l'huile du silicate de calcium et de l'acide citrique ;
c) laisser circuler l'huile ;
d) cuire de la nourriture avec l'huile pendant six à huit heures ;
e) filtrer l'huile pour éliminer les sédiments et les miettes ;
f) retourner l'huile filtrée dans le récipient ;
g) ajouter du silicate de calcium additionnel et de l'acide citrique à l'huile filtrée;
h) recommencer une cuisson avec l'huile pendant six à huit heures ; et
i) répéter les étapes e à h.

8. Procédé selon la revendication 7 dans lequel l'huile est chauffée à une température de 135 °C (275 °F) à 176,6 °C (350 °F).

9. Procédé selon la revendication 7, dans lequel l'étape d'ajout de silicate de calcium et d'acide citrique comprend l'étape de mélange de 70 % à 90 % de silicate de calcium avec 10 % à 30 % d'acide citrique pour former un mélange.

10. Procédé selon la revendication 7, dans lequel l'étape d'ajout de silicate de calcium et d'acide citrique comprend l'étape de mélange de 75 % de silicate de calcium avec 25 % d'acide citrique pour former un mélange.

11. Procédé selon la revendication 7, dans lequel le silicate de calcium et l'acide citrique sont mis en suspension dans l'huile par la convection naturelle de l'huile chauffée.
